# EUROPEAN PATENT SPECIFICATION

(11) **EP 3 677 376 B1**
(45) Date of publication and mention of the grant of the patent: **05.10.2022**
(21) Application number: 18851317.0
(22) Date of filing: 03.08.2018
(51) Int. Cl.: B23K 26/28, B23K 26/08, B23K 26/21, B23K 26/082, B23K 26/244, B23K 26/26, B23K 37/04, B62D 25/02, B23K 101/00, B23K 101/16, B23K 101/18, B23K 103/04

(54) **METHOD OF AND APPARATUS FOR MANUFACTURING A JOINED BODY, AND JOINED BODY**
VERFAHREN UND VORRICHTUNG ZUR HERSTELLUNG EINES VERBUNDENEN KÖRPERS UND VERBUNDENER KÖRPER
PROCÉDÉ ET DISPOSITIF DE FABRICATION DE CORPS ASSEMBLÉ ET CORPS ASSEMBLÉ

(30) Priority: 31.08.2017 JP 2017167218
(43) Date of publication of application: 08.07.2020
(73) Proprietor: Kabushiki Kaisha Kobe Seiko Sho (Kobe Steel, Ltd.), Kobe-shi, Hyogo 651-8585 (JP)
(72) Inventor: WATANABE, Kenichi, Kobe-shi, Hyogo 651-2271 (JP); KIMURA, Takayuki, Kobe-shi, Hyogo 651-2271 (JP); CHEN, Liang, Fujisawa-shi, Kanagawaa 251-8551 (JP); HADANO, Masao, Fujisawa-shi, Kanagawaa 251-8551 (JP); SUZUKI, Reiichi, Fujisawa-shi, Kanagawaa 251-8551 (JP)
(74) Representative: TBK
(86) International application number: PCT/JP2018/029272
(87) International publication number: WO 2019/044388

(56) References cited:
- JP-A- H1 071 480
- JP-A- 2000 197 969
- JP-A- 2002 160 020
- JP-A- 2006 062 460
- JP-A- 2010 005 632
- JP-A- 2015 074 012
- JP-A- 2017 047 457

## Description

The present invention relates to a method of manufacturing joint body, an apparatus for manufacturing a joint body, and a joint body according to the preamble of claims 1, 6 and 11 respectively (see for example JP 2006-062460 A).

### BACKGROUND ART

Patent Documents 1 and 2 disclose a joint body manufactured by joining two metal members, that is, a first metal member and a second metal member, by laser welding. Patent Document 1 discloses that a welding mark made by laser welding is one or a plurality of pairs of straight lines parallel to each other. Patent Document 2 discloses that a welding mark made by laser welding includes a plurality of C-shaped portions arranged in a row, and adjacent C-shaped portions partially overlap each other.

However, neither of Patent Documents disclose or suggest that a metal member is bent during joining by welding.

In general, a ridge portion of a component can be efficiently reinforced by an increase in thickness made by bonding a steel strip (hoop material) with a constant width to the ridge portion by welding or the like. When the ridge portion has a bent shape, the steel strip also needs to conform to the bent shape, which makes it necessary to punch out the steel strip from a wide steel plate with a die or cut the steel strip from the wide steel plate by laser. This brings about an increase in cost and a reduction in yield.

### PRIOR ART DOCUMENTS

### PATENT DOCUMENTS

Patent Document 1: JP 2001-507993 A
Patent Document 2: JP 2016-064725 A
Patent Document 3: JP 2006-062460 A
Patent Document 4: JP 2002-160020 A

JP 2002-160020 A discloses a bonded metal strip for a car body. To produce this strip, two sheets of steel strips are superposed and joined one upon another in the width direction. A first non-overlapping part is formed by one of the steel strips. An overlapping part is formed by the joint between the steel strips, consecutive to the first non-overlapping part. A second non-overlapping part is formed by another one of the steel strips, consecutive to the overlapping part.

### SUMMARY OF THE INVENTION

### PROBLEMS TO BE SOLVED BY THE INVENTION

It is therefore an object of the present invention to provide a method of, an apparatus for manufacturing a joint body, and a joint body that achieve a reduction in cost and an increase in yield by bending, in a case where two metal members are joined together by welding, one of the metal members during the welding.

### MEANS FOR SOLVING THE PROBLEMS

With respect to the manufacturing method the above object is solved by a method according to claim 1.

An apparatus is stated in claim 6.

A joint body is stated in claim 11. Further developments are subject matter of the dependent claims.

### EFFECT OF THE INVENTION

According to the present invention, since the bending is performed with a density of the welding set higher, it is possible to weld, without a special device, the second metal member to the first metal member while bending the second metal member.

### BRIEF DESCRIPTION OF THE DRAWINGS

Fig. 1 is a perspective view of an example of a joint body manufactured by a manufacturing apparatus according to a first embodiment of the present invention;
Fig. 2 is a plan view of the example of the joint body manufactured by the manufacturing apparatus according to the first embodiment of the present invention;
Fig. 3A is a perspective view of an example of a B pillar manufactured by processing the joint body by hot stamping;
Fig. 3B is a perspective view of another example of the B pillar manufactured by processing the joint body by hot stamping;
Fig. 4 is a schematic perspective view of the manufacturing apparatus for the joint body according to the first embodiment of the present invention;
Fig. 5 is a schematic side view of the manufacturing apparatus for the joint body according to the first embodiment of the present invention.
Fig. 6A is a schematic plan view showing an example of an irradiation pattern of laser light;
Fig. 6B is a schematic plan view showing an example of a joint portion obtained based on the irradiation pattern shown in Fig. 6A;
Fig. 7 is a schematic plan view for describing a cutting process;
Fig. 8A is a schematic plan view showing a first alternative of the irradiation pattern of laser light;
Fig. 8B is a schematic plan view showing an example of a joint portion obtained based on the irradiation pattern shown in Fig. 8A;
Fig. 9A is a schematic plan view showing a second alternative of the irradiation pattern of laser light;
Fig. 9B is a schematic plan view showing an example of a joint portion obtained based on the irradiation pattern shown in Fig. 9A;
Fig. 10A is a schematic plan view showing a third alternative of the irradiation pattern of laser light;
Fig. 10B is a schematic plan view showing an example of a joint portion obtained based on the irradiation pattern shown in Fig. 10A;
Fig. 11A is a schematic plan view showing a fourth alternative of the irradiation pattern of laser light;
Fig. 11B is a schematic plan view showing an example of a joint portion obtained based on the irradiation pattern shown in Fig. 11A;
Fig. 12A is a schematic plan view showing a fifth alternative of the irradiation pattern of laser light;
Fig. 12B is a schematic plan view showing an example of a joint portion obtained based on the irradiation pattern shown in Fig. 12A;
Fig. 13A is a schematic plan view showing a sixth alternative of the irradiation pattern of laser light;
Fig. 13B is a schematic plan view showing an example of a joint portion obtained based on the irradiation pattern shown in Fig. 13A;
Fig. 14A is a schematic plan view showing a seventh alternative of the irradiation pattern of laser light;
Fig. 14B is a schematic plan view showing an example of a joint portion obtained based on the irradiation pattern shown in Fig. 14A;
Fig. 15A is a schematic plan view showing an eighth alternative of the irradiation pattern of laser light;
Fig. 15B is a schematic plan view showing an example of a joint portion obtained based on the irradiation pattern shown in Fig. 15A;
Fig. 16A is a schematic plan view showing a ninth alternative of the irradiation pattern of laser light;
Fig. 16B is a schematic plan view showing an example of a joint portion obtained based on the irradiation pattern shown in Fig. 16A;
Fig. 17 is a schematic perspective view of a manufacturing apparatus for a joint body according to a second embodiment of the present invention;
Fig. 18 is a schematic perspective view of a manufacturing apparatus for a joint body according to a third embodiment of the present invention;
Fig. 19 is a perspective view of an example of the joint body manufactured by the manufacturing apparatus according to the third embodiment of the present invention; and
Fig. 20 is a plan view showing an alternative of the joint body.

### MODE FOR CARRYING OUT THE INVENTION

### (First embodiment)

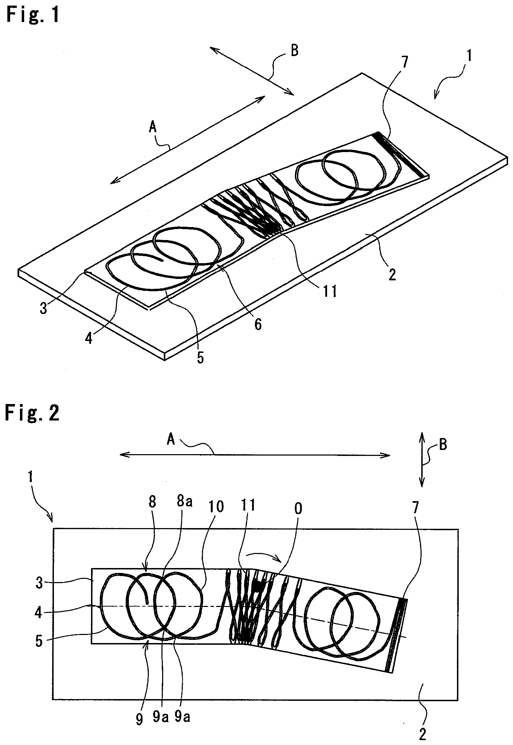

A description will be given below of a first embodiment of the present invention with reference to Fig. 1 to Fig. 16B.

### (Joint body)

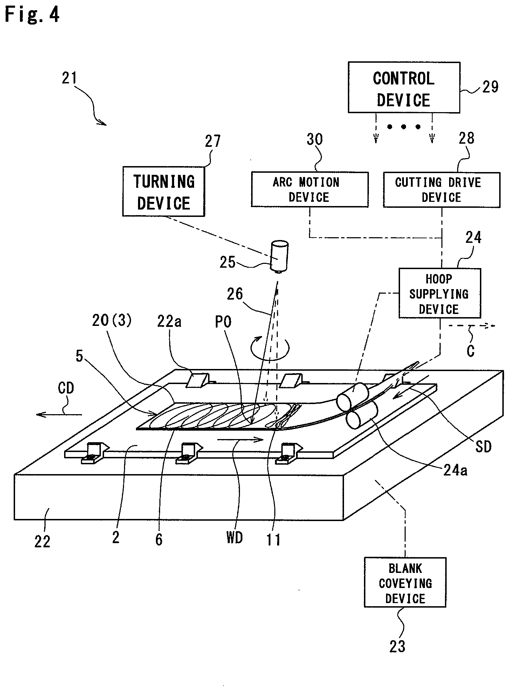

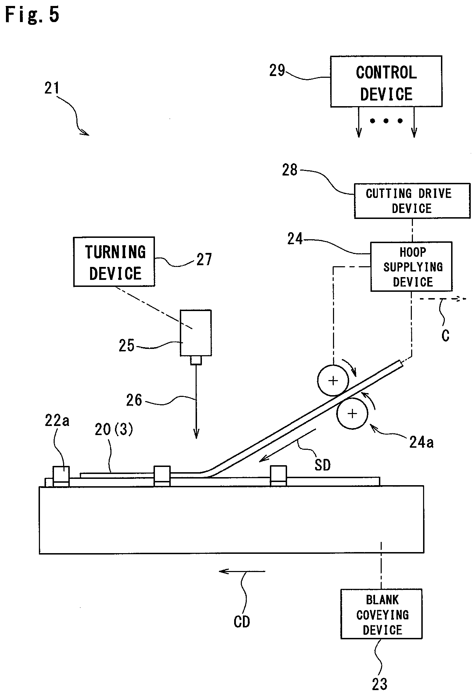

Fig. 1 and Fig. 2 show a joint body 1 manufactured by a manufacturing apparatus (Fig. 4 and Fig. 5) according to the first embodiment of the present invention.

The joint body 1 shown in Fig. 1 and Fig. 2 includes a blank material 2 (first metal member) that is an example of a steel plate and a reinforcing material 3 (second metal member) that is also an example of a steel plate. According to the present embodiment, the reinforcing material 3 is narrower than the blank material 2.

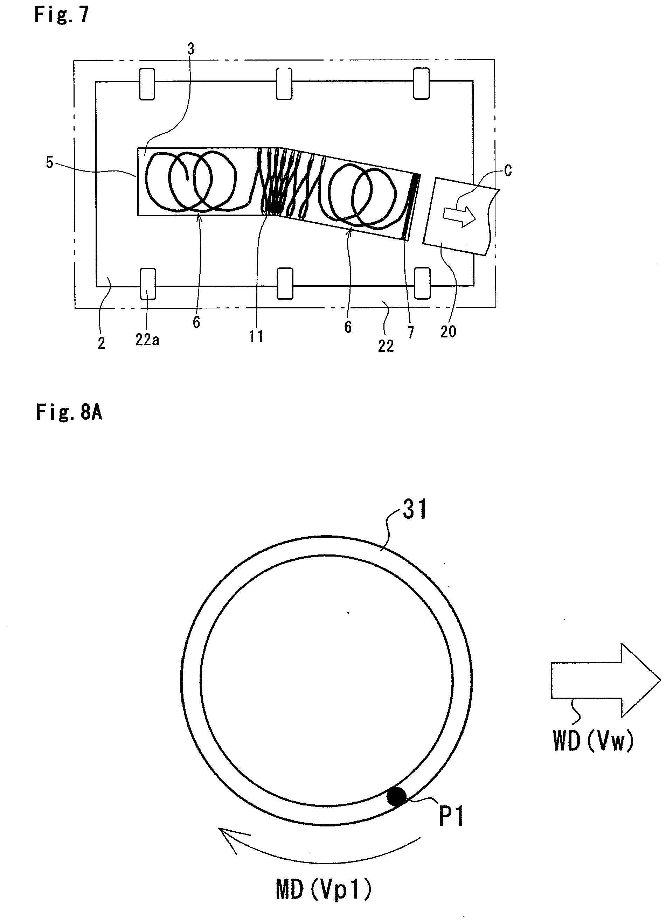

The reinforcing material 3 is placed on the blank material 2 and fixed to the blank material 2 by laser welding. The joint body 1 includes a joint portion 5 formed by one streak of continuous welded portion 4. The blank material 2 and the reinforcing material 3 are joined together along the joint portion 5. The joint portion 5 shown in Fig. 1 and Fig. 2 is merely an example, and, as will be described later with reference to Fig. 8A to Fig. 16B, the specific form of the joint portion 5 includes various alternatives.

The joint portion 5 includes a main body 6, a bent portion 11, and an end portion 7.

According to the present embodiment, the welded portion 4 in the main body 6 of the joint portion 5 has a curved shape having a periodic repetitive pattern and includes a first longitudinal portion 8, a second longitudinal portion 9, and a plurality of connecting portions 10 having a curved shape. In the first longitudinal portion 8, a plurality of intersecting portions 8a (first intersecting portions) where the welded portion 4 intersects itself are arranged in one direction A (first direction) in plan view, and the first longitudinal portion 8 itself extends in the direction A. The direction A coincides with a welding direction (see a symbol WD in Fig. 4, for example) to be described later and a direction opposite to the welding direction. The second longitudinal portion 9 is located apart from the first longitudinal portion 8 in a direction B orthogonal to the direction A in plan view. In the second longitudinal portion 9, as with the first longitudinal portion 8, a plurality of intersecting portions 9a (second intersecting portions) where the welded portion 4 intersects itself are arranged in the direction A in plan view, and the second longitudinal portion 9 itself extends in the direction A. The plurality of connecting portions 10 are arranged at intervals in the direction A, each of the connecting portions 10 extends in the direction B, and both ends of each of the connecting portions 10 are connected to the first longitudinal portion 8 and the second longitudinal portion 9. According to the present embodiment, the first longitudinal portion 8, the second longitudinal portion 9, and the plurality of connecting portions 10 form a ladder structure in plan view.

At the bent portion 11 of the joint portion 5, the connecting portions 10 of the welded portion 4 are arranged at closer intervals . When the welded portion 4 is formed, the bent portion 11 is formed by changing a positional relation of the reinforcing material 3 relative to the main body 6 in plan view as described later.

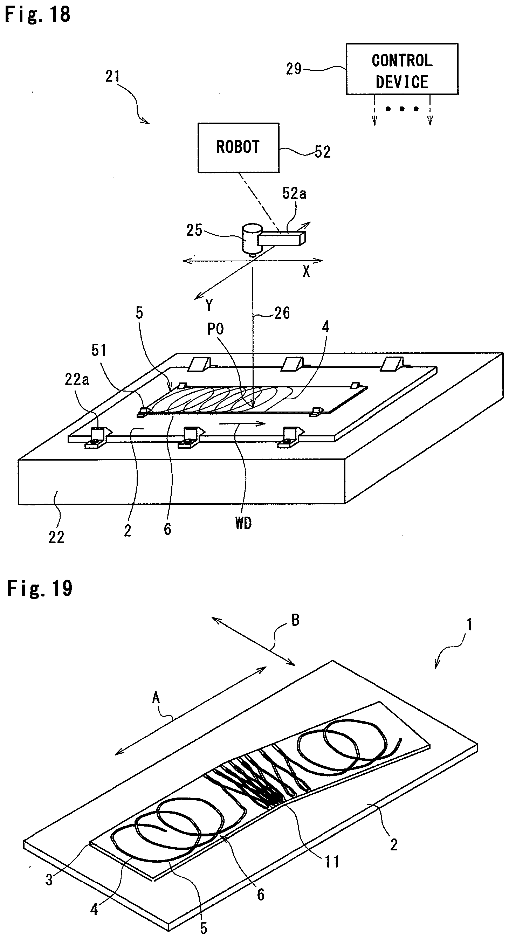

At the end portion 7 of the joint portion 5, the welded portion 4 has a zigzag shape or a zigzag-line shape that extends forward and backward, at close intervals, between both ends in a width direction of the reinforcing material 3. As will be described later with reference to Fig. 19, the joint portion 5 may include only the main body 6 without the end portion 7.

In the main body 6 of the joint portion 5, the welded portion 4 having a line shape continuously extends in two directions orthogonal to each other, that is, in both the directions A, B, in plan view. In other words, in the main body 6 of the joint portion 5, the welded portion 4 having a line shape is provided extending two-dimensionally, that is, in a planar form. Such a structure allows at least one streak of welded portion 4 to be present in plan view within a region having a certain area in the main body 6 of the joint portion 5. In particular, within small regions near the intersecting portions 8a of the first longitudinal portion 8 and the intersecting portions 9a of the second longitudinal portion 9, a plurality of streaks of welded portions 4 are present. The main body 6 of the joint portion 5 having such a structure makes it possible to sufficiently increase the joint strength between the blank material 2 and the reinforcing material 3. For example, when two members are joined together by spot welding, the welded portion includes a plurality of scattered spots. Further, the welded portion made even by laser welding may include one or a plurality of pairs of parallel straight lines, or may include a plurality of C-shaped portions arranged in a row and adjacent to each other. Compared to any of the above structures, the main body 6 of the joint portion 5 in which the welded portion 4 having a line shape continuously extends in both the directions A, B shown in Fig. 1 and Fig. 2 makes it possible to join the blank material 2 and the reinforcing material 3 with higher joint strength.

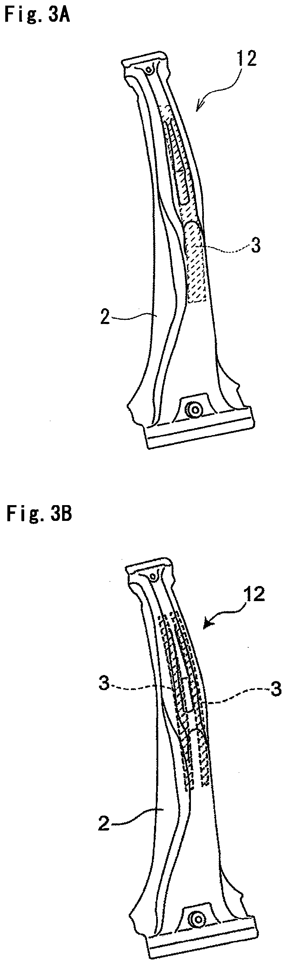

Since the blank material 2 and the reinforcing material 3 are joined together with sufficient joint strength, the joint body 1 is suitable for processing by hot stamping, and it is thus possible to increase strength of a produced vehicle frame component against collision. For example, Fig. 3A shows an example of a B pillar 12 (an example of the vehicle frame component) manufactured by processing the joint body 1 by hot stamping. In this example, one sheet of reinforcing material 3 is joined to the blank material 2. The B pillar 12 is produced by a method in which the reinforcing material 3 is welded only to a portion of the blank material 2 that needs to be reinforced so as to have the joint portion 5 shown in Fig. 1 and Fig. 2 and then molded integrally with the blank material 2 by hot stamping. Fig. 3B shows another example of the B pillar 12 manufactured by processing the joint body 1 by hot stamping. In this example, two reinforcing members 3 are joined to the blank material 2, and each of the reinforcing materials 3 is joined to a ridge line portion formed by hot stamping.

In order to sufficiently increase the joint strength between the blank material 2 and the reinforcing material 3, it is preferable that, in the main body 6 of the joint portion 5, at least one streak of welded portion 4 passes through a square region whose side is 2 cm long, for example.

### (Manufacturing apparatus and manufacturing method for joint body)

Fig. 4 and Fig. 5 show a manufacturing apparatus 21 for the joint body 1 shown in Fig. 1 and Fig. 2. As will be described later with reference to Fig. 8A to Fig. 16B, the manufacturing apparatus 21 is also capable of manufacturing a joint body 1 that is different in structure of the joint portion 5 from the joint body 1 shown in Fig. 1 and Fig. 2.

The manufacturing apparatus 21 includes a table 22 (placing table) on which the blank material 2 is detachably held by a fixture 22a. A blank conveying device 23 moves the table 22 and the blank material 2 held on the table 22 at a constant speed in a conveying direction CD opposite to the welding direction WD. The table 22 and the blank conveying device 23 serve as a conveying member.

The manufacturing apparatus 21 includes a hoop supplying device 24. The hoop supplying device 24 (supplying member) includes a supplying roll pair 24a. The hoop supplying device 24 unwinds a hoop material 20 wound in a coil shape (that becomes the reinforcing material 3 when the joint body 1 is completed) with the roll pair 24a to supply the hoop material 20 onto the blank material 2 held on the table 22. More specifically, the hoop supplying device 24 continuously supplies the hoop material 20 thus unwound in a supplying direction SD that coincides with the conveying direction CD of the blank material 2 while pressing the hoop material 20 against the blank material 2 obliquely from above. A supplying speed of the blank material 2 supplied by the hoop supplying device 24 is synchronized with a conveying speed of the blank material 2 conveyed by the blank conveying device 23. Further, it is also possible to supply not only a continuous body wound in a hoop shape or a coil shape, but also a band material cut in advance to a length of the reinforcing material 3 (second metal member).

The manufacturing apparatus 21 includes a laser oscillation system 25. The laser oscillation system 25 includes components necessary for generating laser light, such as a laser oscillation element, a drive circuit, and an optical system. Laser light 26 emitted downward from the laser oscillation system 25 is projected onto an upper surface of the hoop material 20 at a position immediately before the hoop material 20 is pressed against the blank material 2 by the hoop supplying device 24. In Fig. 4, a symbol P0 denotes an irradiation position of the laser light 26. According to the present embodiment, the laser oscillation system 25 does not move in horizontal and vertical directions.

The manufacturing apparatus 21 includes a turning device 27 (irradiation direction changing unit). The turning device 27 periodically changes an irradiation direction of the laser light 26 emitted from the laser oscillation system 25. As will be described in detail later, assuming that the laser oscillation system 25 is not in motion in the welding direction WD relative to the blank material 2 and the hoop material 20, the turning device 27 periodically changes the irradiation direction of the laser light 26 to move a virtual irradiation position P1 along a closed figure (a circle as will be described later, according to the present embodiment). The blank conveying device 23, the hoop supplying device 24, and the turning device 27 serve as an irradiation position motion unit.

The manufacturing apparatus 21 includes an arc motion device 30 (plane position changing unit) . As will be described in detail later, the arc motion device 30 moves the hoop supplying device 24 in an arc-motion direction R indicated by an arrow SD during the welding of the hoop material 20 to the blank material 2, thereby applying a bending force to the hoop material 20 to bend the hoop material 20. At this time, it is preferable that applying the bending force to the hoop material 20 bend the hoop material 20 about a predetermined position O located on an outer side (a side in a direction opposite to a bending direction) of the hoop material 20 relative to a center line extending in the longitudinal direction of the hoop material 20. This makes it possible to prevent the occurrence of a failure such as a break of the hoop material 20 caused by a tensile force exceeding an allowable range that acts on an outer-side edge portion of the hoop material 20.

The manufacturing apparatus 21 includes a cutting drive device 28. As will be described in detail later, the cutting drive device 28 cuts the hoop material 20 by moving, after the hoop material 20 is welded to the blank material 2, the hoop supplying device 24 in the welding direction WD as indicated by an arrow C to apply tension to the hoop material 20. Note that, as described above, a configuration where the band material cut in advance as the reinforcing material 3 (second metal member) is used eliminates the need for the cutting drive device 28.

A control device 29 controls, in a centralized manner, operations of various components including the blank conveying device 23, the hoop supplying device 24, the laser oscillation system 25, the turning device 27, the arc motion device 30, and the cutting drive device 28.

A description will be given below of an operation of the manufacturing apparatus 21, that is, a manufacturing method for the joint body 1 performed by the manufacturing apparatus 21.

The irradiation direction of the laser light 26 emitted from the laser oscillation system 25 is periodically changed by the turning device 27. Further, the blank material 2 is moved in the conveying direction CD by the blank conveying device 23, and the hoop material 20 is continuously supplied from the hoop supplying device 24 in the supplying direction SD that coincides with the conveying direction CD. The movements of the blank material 2 and the hoop material 20 cause the laser oscillation system 25 to move relative to the blank material 2 and the hoop material 20 in the welding direction WD (opposite to the conveying direction CD and the supplying direction SD). The periodical change of the irradiation direction of the laser light 26 and the movement of the laser oscillation system 25 in the welding direction WD relative to the blank material 2 and the hoop material 20 change an irradiation position P0 of the laser light 26 on the upper surface of the hoop material 20. As a result, as described above, the main body 6 of the joint portion 5 including the first longitudinal portion 8, the second longitudinal portion 9, and the plurality of connecting portions 10 is obtained.

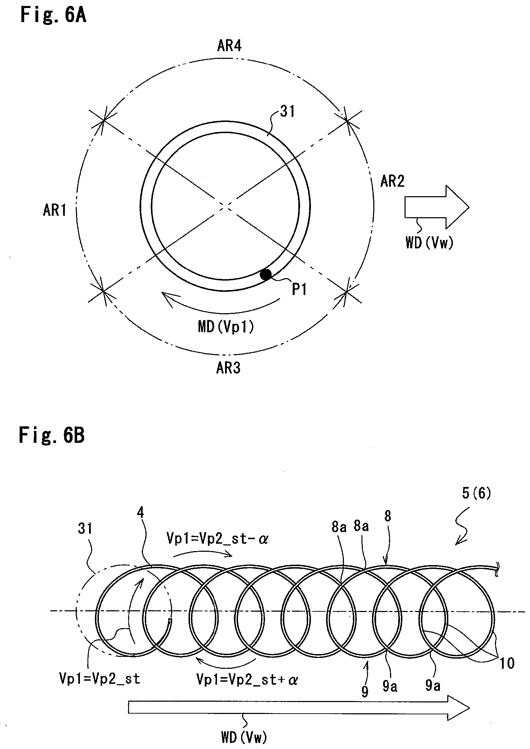

Fig. 6A shows an irradiation pattern 31 of the laser light 26 according to the present embodiment. The irradiation pattern 31 is a closed figure along which the virtual irradiation position P1 of the laser light 26 moves assuming that the laser oscillation system 25 is not in motion in the welding direction WD relative to the blank material 2 and the hoop material 20. The irradiation pattern 31 according to the present embodiment has a circular shape. The irradiation pattern 31 is obtained by causing the turning device 27 to periodically change the irradiation direction of the laser light 26 emitted from the laser oscillation system 25. In Fig. 6A, a symbol MD denotes a direction in which the virtual irradiation position P1 moves on the irradiation pattern 31 according to the present embodiment.

Fig. 6B shows the main body 6 of the joint portion 5 obtained based on the irradiation pattern 31 having a circular shape shown in Fig. 6A. In general, the shape of the main body 6 of the joint portion 5 is determined based on a geometric shape of the irradiation pattern 31, a speed Vw at which the laser oscillation system 25 moves in the welding direction WD relative to the blank material 2 and the hoop material 20, and a speed Vp1 at which the virtual irradiation position P1 moves on the irradiation pattern 31 to be described later.

According to the present embodiment, the speed Vp1 at which the virtual irradiation position P1 moves on the irradiation pattern 31 is not constant. Specifically, for regions AR1, AR2 of the irradiation pattern 31 that extend approximately orthogonal to the welding direction WD, the speed Vp1 is set equal to a reference speed Vp1_st (Vp1 = Vp1_st). As the reference speed Vp1_st, for example, an average of the speed Vp1 at which the virtual irradiation position P1 moves on the irradiation pattern 31 can be used. For a region AR3 of the irradiation pattern 31 where the virtual irradiation position P1 moves in the direction approximately opposite to the welding direction WD, the speed Vp1 at which the virtual irradiation position P1 moves is set equal to a speed resulting from adding a correction α (α is a positive number) to the reference speed Vp1_st (Vp1 = Vp1_st + α). On the other hand, for a region AR4 of the irradiation pattern 31 where the virtual irradiation position P1 moves approximately in the welding direction WD, the speed Vp1 at which the virtual irradiation position P1 moves is set equal to a speed resulting from subtracting the correction α from the reference speed Vp1_st (Vp1 = Vp1_st - α). As described above, controlling the speed Vp1 at which the virtual irradiation position P1 moves on the irradiation pattern 31 allows a speed Vr at which the irradiation position P0 moves on the main body 6 of the joint portion 5 to be maintained within a favorable speed range. That is, the speed Vr at which the irradiation position P0 moves on the main body 6 of the joint portion 5 is made uniform (this welding corresponds to a first process, and a density of the welding corresponds to a first density according to the present invention) . As a result, an excellent main body 6 of the joint portion 5 having a uniform depth, width, and the like can be obtained.

The hoop supplying device 24 supplies the hoop material 20 unwound while pressing the hoop material 20 against the blank material 2 obliquely from above. The supplying direction SD of the hoop material 20 supplied from the hoop supplying device 24 coincides with the conveying direction CD of the blank material 2, and the supplying speed of the hoop material 20 coincides with the conveying speed of the blank material 2 (this speed at which the blank material 2 is conveyed and the hoop material 20 is supplied corresponds to a first speed according to the present invention) . That is, relative positions of the blank material 2 and the hoop material 20 do not move. Accordingly, the hoop material 20 can be fixed to the blank material 2 by welding with the laser light 26 emitted from the laser oscillation system 25 without being temporarily fixed by a clamp using a fixture or the like. Further, since this eliminates the need for a fixture or the like, the entire surface of the hoop material 20 can be irradiated with the laser light 26. That is, the main body 6 of the joint portion 5 can be formed on the entire surface of the hoop material 20.

When the positional relation of the hoop material 20 relative to the blank material 2 in plan view is changed, that is, when the hoop material 20 is bent, the speed at which the blank material 2 is conveyed and the hoop material 20 is supplied is gradually reduced from the first speed as it is getting closer to a portion to be bent. Then, upon proceeding to the second process, a second speed lower than the first speed is set. This causes the irradiation position P0 of the laser light 26 to be formed at closer intervals in the width direction of the hoop material 20 (a direction orthogonal to the welding direction WD) (this welding corresponds to the second process, and a density of the welding corresponds to a second density according to the present invention, and for example, the second density may be determined to be greater than the first density in number of welded portions 4 per unit area). The hoop material 20 is partially heated and softened by laser irradiation at the second density, thereby allowing the arc motion device 30 to be driven to move the hoop supplying device 24 in the arc-motion direction R indicated by an arrow D. Herein, when a path of a single forward and backward movement of the irradiation position P0 of the laser light 26 is defined as one stroke, an arc-motion speed of the hoop supplying device 24 is determined such that the bending performed by the arc motion device 30 compresses an inner-side edge portion (a side in the bending direction) of the hoop material 20 by an irradiation width of the laser light 26 (a bead width, for example, 1 to 1.5 mm). As a result, the hoop material 20 is bent, and the bent portion 11 is formed. At this time, the hoop material 20 is bent about the predetermined position O located on the outer side (a side in the direction opposite to the bending direction) of the hoop material 20 relative to the center line extending in the longitudinal direction of the hoop material 20. This prevents the hoop material 20 from being broken by a tensile force acting on the outer-side edge portion of the hoop material 20.

As described above, the bending performed in the second process allows the hoop material 20 to be bent even during the welding. That is, the hoop material 20 can be welded to the blank material 2 while being subjected to the bending, which increases workability. Note that means for bending the hoop material 20 is not limited to the arc motion device 30 configured to move the hoop supplying device 24 in an arc, and may be means for moving the table 22 in an arc or means for directly applying a force in the bending direction to the hoop material 20.

According to the present invention, when the bent portion 11 is formed, welding similar the first process is continued. That is, the speed at which the blank material 2 is conveyed and the hoop material 20 is supplied in the second process is gradually increased to return to the speed in the first process. Similarly, welding based on the irradiation pattern shown in Fig. 6A is resumed to obtain the main body 6 of the joint portion 5 shown in Fig. 6B. When the main body 6 of the joint portion 5 having a necessary length is obtained in this way, the blank material 2 is cut. When the hoop material 20 is cut, the virtual irradiation position P1 is repeatedly moved forward and backward in a direction orthogonal to the welding direction WD without interruption of the conveyance of the blank material 2 and the supply of the hoop material 20. As a result, the irradiation position P0 of the laser light 26 moves forward and backward in a zigzag-line shape at close intervals in a width direction of the hoop material 20 (the direction orthogonal to the welding direction WD), thereby forming the end portion 7 of the joint portion 5. Since the welded portion 4 having a zigzag-line shape is densely located in the end portion 7, a molten pool before solidification reaches the vicinity of the lower surface of the blank material 2. Immediately after the irradiation with the laser light 26 is stopped, the cutting drive device 28 moves the hoop supplying device 24 in the direction indicated by the arrow C (the direction that coincides with the welding direction WD) to apply tension to the hoop material 20. This tension cuts the hoop material 20 at the end portion 7 (see Fig. 7). Of the hoop material 20 thus cut, a portion joined to the blank material 2 along the joint portion 5 becomes the reinforcing material 3.

The bending of the hoop material 20 relative to the blank material 2 may be performed a plurality of times. Further, the bending direction is not only one direction but also a direction opposite to the one direction, and the bending may be performed while continuously changing the direction. In short, the bending may be performed freely according to the shape of the joint body to be obtained.

Further, in order to continuously weld the reinforcing material 3 using the hoop material 20, it is necessary to cut the hoop material 20 every time the joint portion 5 is formed for each sheet of reinforcing material 3. According to the present embodiment, since tension is applied to the hoop material 20 by the cutting drive device 28 to cut the hoop material 20 after the formation of the end portion 7 where the welded portion 4 is densely located, it is not necessary to provide a mechanical cutting device such as a large cutter and in turn makes it possible to downsize the manufacturing apparatus 21. Note that means for applying tension to the hoop material 20 is not particularly limited to any specific means, and means such as a weight or a spring may be employed.

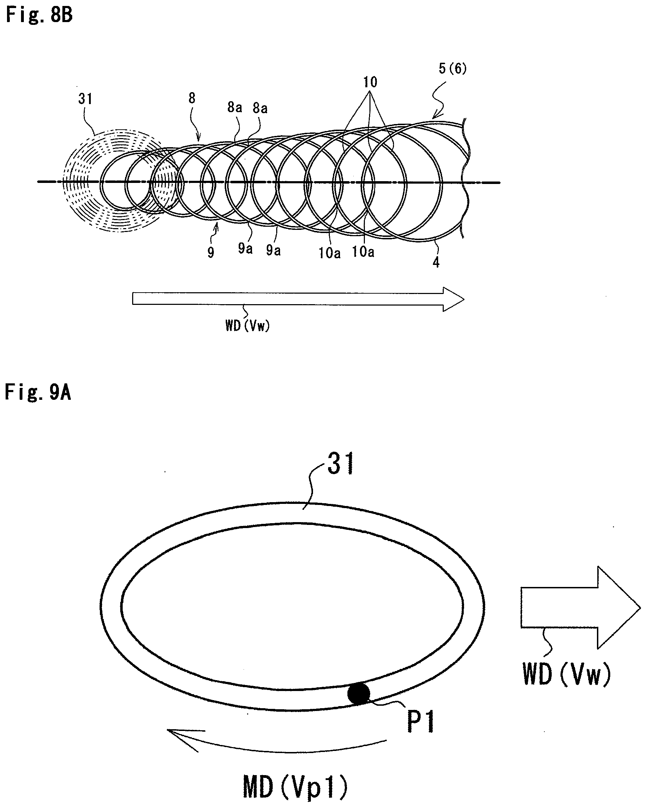

Fig. 8A, Fig. 9A, Fig. 10A, Fig. 11A, Fig. 12A, Fig. 13A, Fig. 14A, Fig. 15A, and Fig. 16A show alternatives of the irradiation patterns 31. Fig. 8B, Fig. 9B, Fig. 10B, Fig. 11B, Fig. 12B, Fig. 13B, Fig. 14B, Fig. 15B, and Fig. 16B each show the main body 6 of the joint portion 5 obtained based on a corresponding one of the irradiation patterns 31. In these drawings, the same or similar elements as shown in Fig. 6A and Fig. 6B are denoted by the same symbols.

For any of these alternative irradiation patterns 31, the control of the speed Vp1 at which the virtual irradiation position P1 moves on the irradiation pattern 31 described with reference to Fig. 6A can be performed. When this control is performed, the speed Vp1 is set equal to the reference speed Vp1_st for a region of the irradiation pattern 31 that extends approximately orthogonal to the welding direction WD. Further, for a region of the irradiation pattern 31 where the virtual irradiation position P1 moves in the direction approximately opposite to the welding direction WD, the speed Vp1 is set equal to a speed resulting from adding the correction α to the reference speed Vp1_st (Vp1 = Vp1_st + α). Further, for a region of the irradiation pattern 31 where the virtual irradiation position P1 moves approximately in the welding direction WD, the speed Vp1 is set equal to a speed resulting from subtracting the correction α from the reference speed Vp1_st (Vp1 = Vp1_st - α).

The irradiation pattern 31 shown in Fig. 8A has a circular shape, and a radius of the circle gradually increases. As shown in Fig. 8B, in the main body 6 of the joint portion 5 obtained based on this irradiation pattern 31, intersecting portions 10a are formed where the welded portion 4 constituting adjacent connecting portions 10 intersects itself. In other words, in this alternative, a plurality of connecting portions 10 form a network structure. With this irradiation pattern 31, even for the reinforcing material 3 whose width varies in a longitudinal direction, it is possible to form the welded portion 4 by irradiating the entire surface with the laser light 26. In contrast to the case shown in Fig. 8A, the radius of the circular irradiation pattern 31 can be gradually decreased. Further, even with the other irradiation patterns 31 shown in Fig. 9A, Fig. 10A, Fig. 11A, Fig. 12A, Fig. 13A, Fig. 14A, Fig. 15A, and Fig. 16A, a gradual increase or decrease in external dimension allows the entire surface of the reinforcing material 3 whose width varies in the longitudinal direction to be irradiated with the laser light 26.

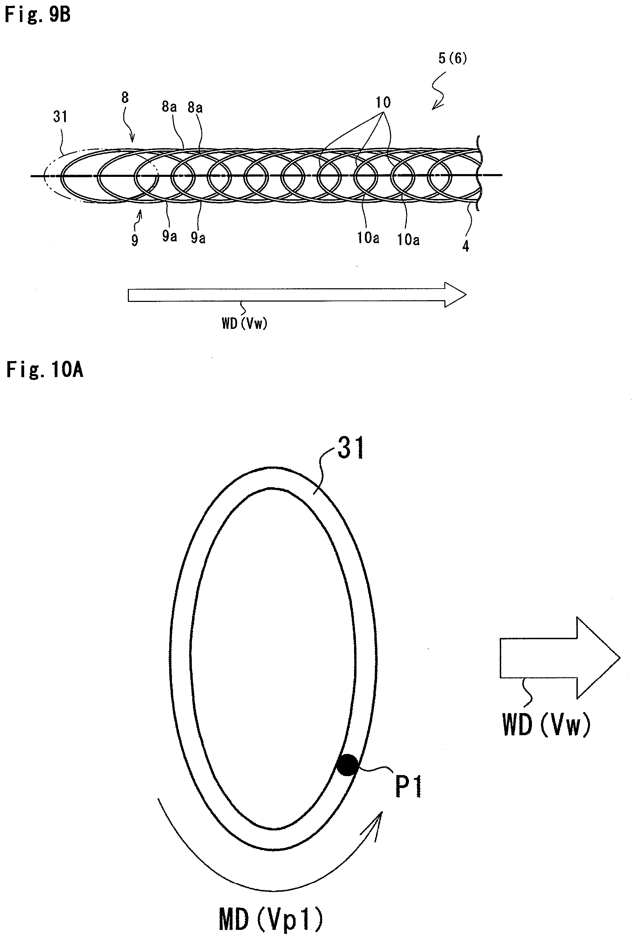

The irradiation patterns 31 shown in Fig. 9A has an elliptical shape whose major axis extends in the welding direction WD. As shown in Fig. 9B, in the main body 6 of the joint portion 5 obtained based on this irradiation pattern 31, the intersecting portions 10a are also formed where the welded portion 4 constituting adjacent connecting portions 10 intersects itself. In other words, in this alternative, a plurality of connecting portions 10 form a network structure.

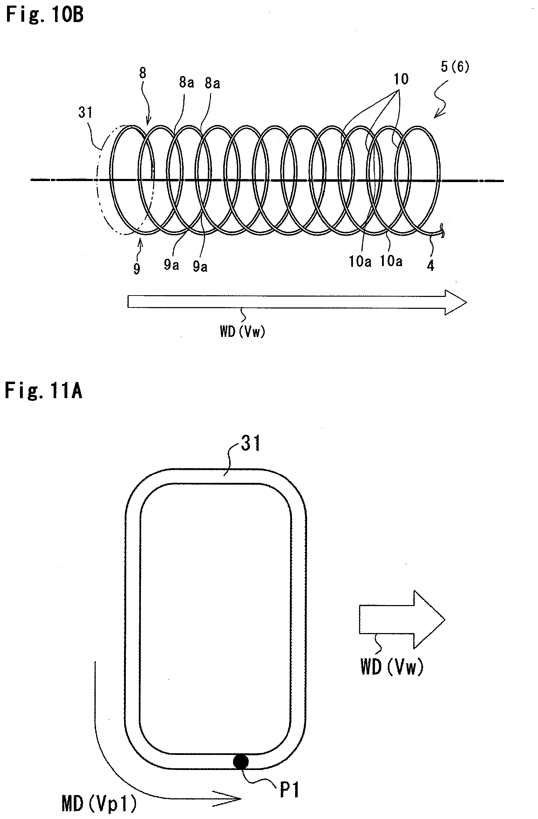

The irradiation pattern 31 shown in Fig. 10A has an elliptical shape whose minor axis extends in the welding direction WD. As shown in Fig. 10B, in the main body 6 of the joint portion 5 obtained based on this irradiation pattern 31, the irradiation pattern 31 also has an elliptical shape, but has a plurality of connecting portions 10 arranged in the welding direction WD at intervals closer than the intervals of the irradiation pattern 31 shown in Fig. 9A.

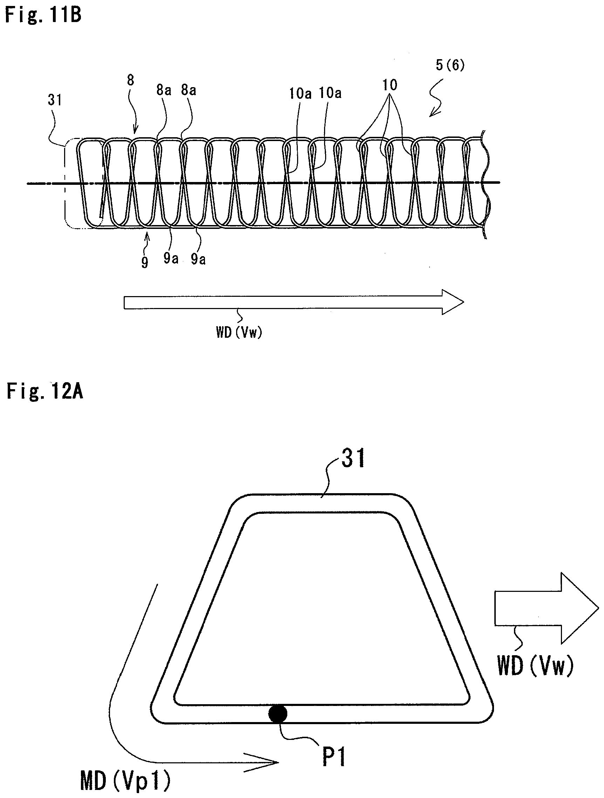

The irradiation pattern 31 shown in Fig. 11A has a rectangular shape whose short sides extend in the welding direction WD. As shown in Fig. 11B, in the main body 6 of the joint portion 5 obtained based on this irradiation pattern 31, for example, the first and second longitudinal portions 8, 9 have a shape similar to a geometric straight line as compared with the irradiation pattern 31 (circular) shown in Fig. 6A. Further, each of the connecting portions 10 has a linear shape. Furthermore, the intersecting portions 10a are formed where the welded portion 4 constituting adjacent connecting portions 10 intersects itself. That is, even in this alternative, the plurality of connecting portions 10 form a network structure.

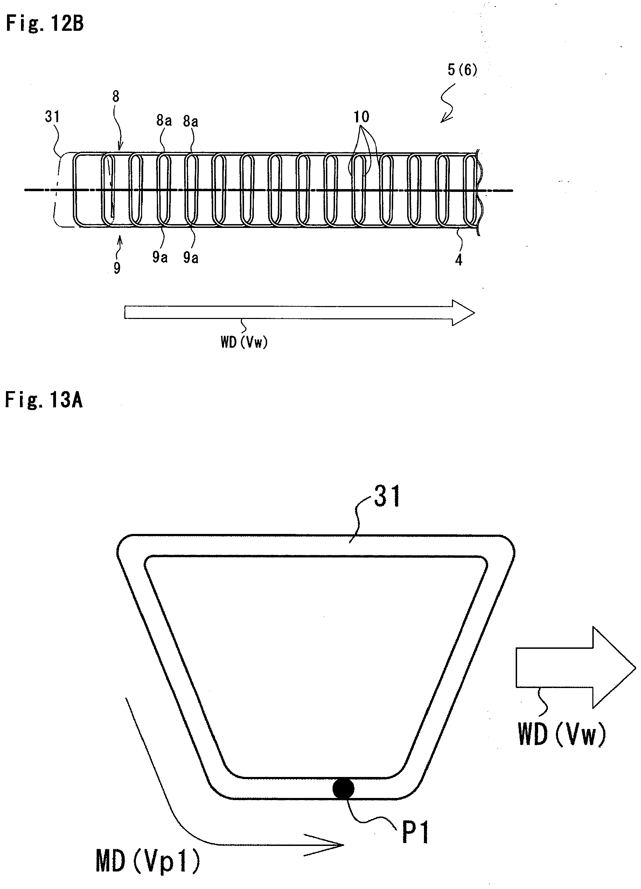

The irradiation pattern 31 shown in Fig. 12A has an isosceles trapezoidal shape whose upper base and lower base extend in the welding direction WD. As shown in Fig. 12B, in this alternative, both the speed Vw at which the laser oscillation system 25 moves in the welding direction WD relative to the blank material 2 and the hoop material 20 and the speed Vp1 at which the virtual irradiation position P1 moves on the irradiation pattern 31 are appropriately set, thereby causing the first and second longitudinal portions 8, 9 to linearly extend in the welding direction WD. This further causes the connecting portions 10 to linearly extend in a direction approximately orthogonal to the welding direction WD. The welded portion 4 constituting the connecting portions 10 does not intersect itself, and the main body 6 of the joint portion 5 forms a ladder structure.

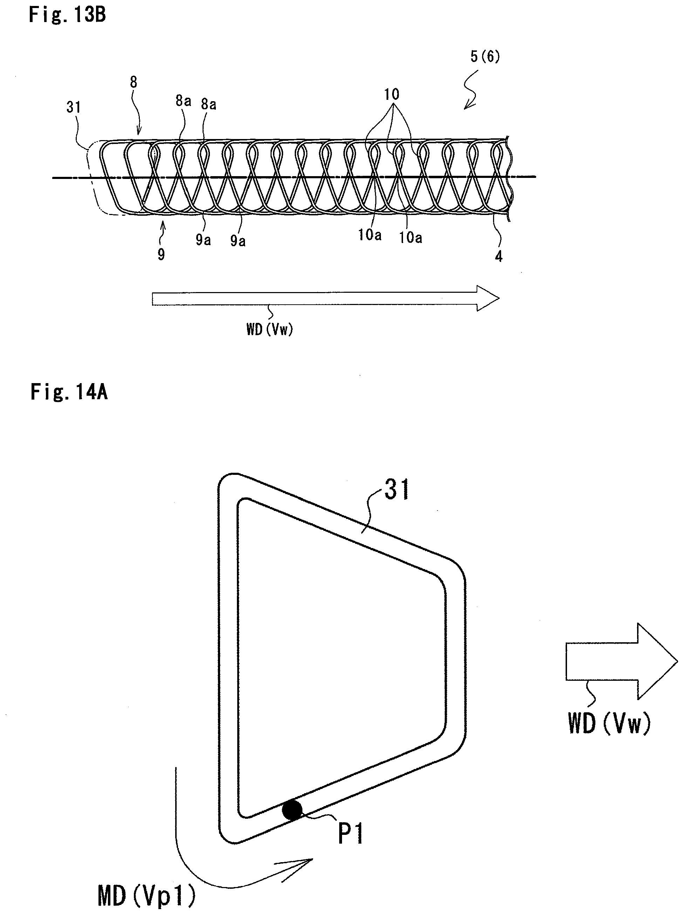

The irradiation pattern 31 shown in Fig. 13A has an isosceles trapezoidal shape whose upper base and lower base extend in the welding direction WD, but is a pattern resulting from vertically inverting the irradiation pattern 31 shown in Fig. 12A. As shown in Fig. 13B, in the main body 6 of the joint portion 5 obtained based on this irradiation pattern 31, for example, the first and second longitudinal portions 8, 9 each have a shape similar to a straight line as compared with the irradiation pattern 31 (circular) shown in Fig. 6A. Further, each of the connecting portions 10 has a linear shape. Furthermore, the intersecting portions 10a are formed where the welded portion 4 constituting adjacent connecting portions 10 intersects itself. That is, even in this alternative, the plurality of connecting portions 10 form a network structure.

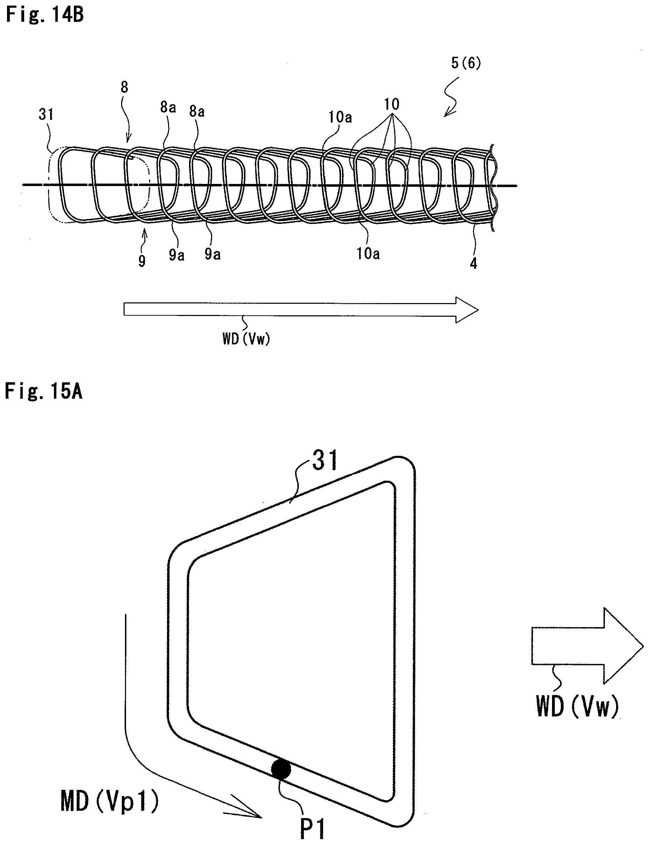

The irradiation pattern 31 shown in Fig. 14A has an isosceles trapezoidal shape whose upper base and lower base extend in the direction orthogonal to the welding direction WD, and the upper base is oriented downstream in the welding direction WD. As shown in Fig. 14B, in the main body 6 of the joint portion 5 obtained based on this the irradiation pattern 31, each of the connecting portions 10 has an approximately inverted C-shape. Further, the intersecting portions 10a are formed where the welded portion 4 constituting adjacent connecting portions 10 intersects itself. That is, even in this alternative, the plurality of connecting portions 10 form a network structure.

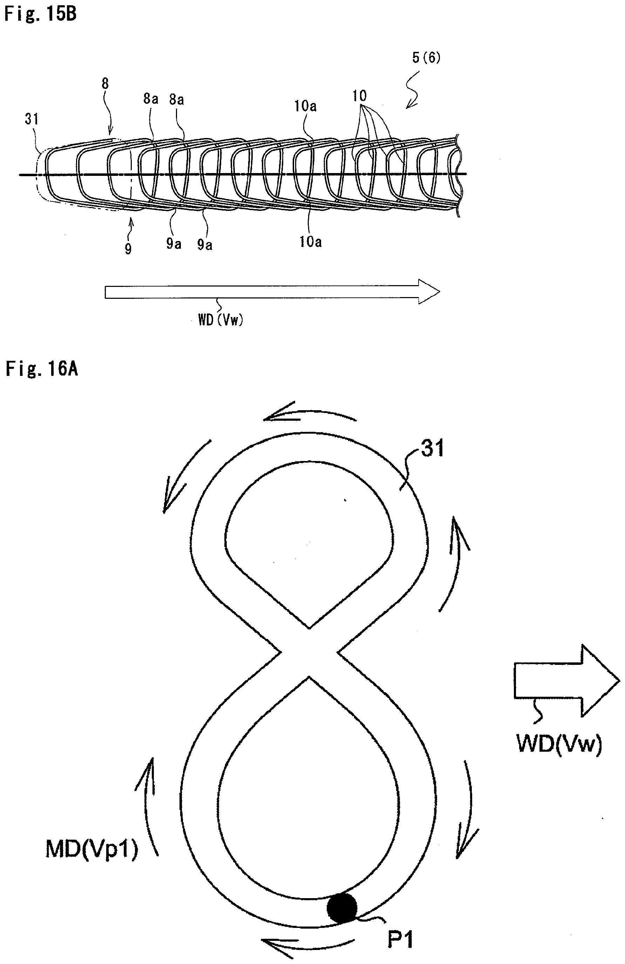

The irradiation pattern 31 shown in Fig. 15A has an isosceles trapezoidal shape whose upper base and lower base extend in the direction orthogonal to the welding direction WD, and the lower base is oriented downstream in the welding direction WD. As shown in Fig. 15B, in the main body 6 of the joint portion 5 obtained based on this the irradiation pattern 31, each of the connecting portions 10 has an approximately C-shape. Further, the intersecting portions 10a are formed where the welded portion 4 constituting adjacent connecting portions 10 intersects itself. That is, even in this alternative, the plurality of connecting portions 10 form a network structure.

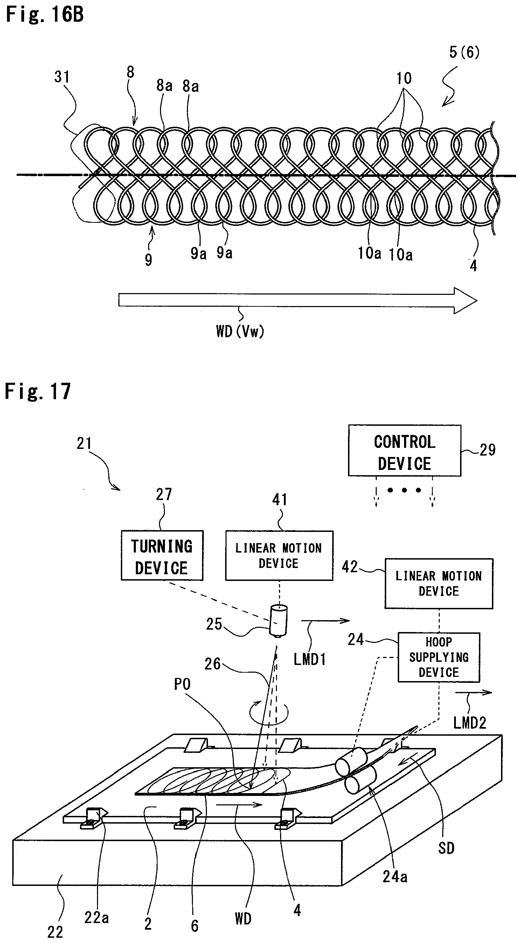

The irradiation pattern 31 shown in Fig. 16A has a figure eight shape. As shown in Fig. 16B, in the main body 6 of the joint portion 5 obtained based on this irradiation pattern 31, each of the connecting portions 10 includes curved ends connected to the first and second longitudinal portions 8, 9, and a center portion has an approximately linear shape . Further, the intersecting portions 10a are formed where the welded portion 4 constituting adjacent connecting portions 10 intersects itself. That is, even in this alternative, the plurality of connecting portions 10 form a network structure. An outer circumferential portion of the figure eight shape may have an elliptical shape.

Regarding the manufacturing apparatus 21 according to second and third embodiments to be described below, a structure or function of which no specific description will be given is the same as the structure or function according to the first embodiment. In the drawings relating to these embodiments, the same or similar elements are denoted by the same symbols.

### (Second embodiment)

Fig. 17 shows a manufacturing apparatus 21 for a joint body according to the second embodiment of the present invention.

The manufacturing apparatus 21 does not include the blank conveying device 23 (see Fig. 1 and Fig. 2), and the table 22 and the blank material 2 held on the table 22 are fixed. The manufacturing apparatus 21 includes a linear motion device 41 that linearly moves the laser oscillation system 25 in the welding direction WD (indicated by an arrow LMD1), and a linear motion device 42 that linearly moves, in a similar manner, the hoop supplying device 24 in the welding direction WD (indicated by an arrow LMD2). The linear motion devices 41, 42 serve as a synchronous motion unit according to the present invention.

The hoop material 20 is continuously supplied by the hoop supplying device 24 from obliquely above the blank material 2. The laser oscillation system 25 and the hoop supplying device 24 move in the welding direction WD at a speed synchronized with the supplying speed of the hoop material 20. Further, the irradiation direction of the laser light 26 emitted from the laser oscillation system 25 is changed by the turning device 27 such that the virtual irradiation position P1 moves along a specific irradiation pattern 31 (see Fig. 6A, Fig. 8A, Fig. 9A, Fig. 10A, Fig. 11A, Fig. 12A, Fig. 13A, Fig. 14A, Fig. 15A, and Fig. 16A). Through the above processes, the joint portion 5 is formed based on the irradiation pattern 31 (see Fig. 6B, Fig. 8B, Fig. 9B, Fig. 10B, Fig. 11B, Fig. 12B, Fig. 13B, Fig. 14B, Fig. 15B, and Fig. 16B). Note that the linear motion device 42 applies, after the formation of the end portion 7 of the joint portion 5, a tension force to the hoop material 20 to cut the hoop material 20.

### (Third embodiment)

Fig. 18 shows a manufacturing apparatus 21 for a joint body according to the second embodiment of the present invention.

The manufacturing apparatus 21 does not include the blank conveying device 23 (see Fig. 1 and Fig. 2), and the table 22 and the blank material 2 held on the table 22 are fixed. Further, the manufacturing apparatus 21 does not include the hoop supplying device 24 (see Fig. 1 and Fig. 2), and the reinforcing material 3 that has been cut out is temporarily fixed to the blank material 2 by a fixture 51. The reinforcing material 3 that has been cut out may be temporarily fixed to the blank material 2 by spot welding or laser spot welding. The laser oscillation system 25 is fixedly held by a robot arm 52a included in a robot 52 such that the laser light 26 is projected downward. In particular, according to the present embodiment, the manufacturing apparatus 21 does not include the turning device 27 (see Fig. 1 and Fig. 2), and the irradiation direction of the laser light 26 is constant.

The robot arm 52a moves the laser oscillation system 25 in two directions in a horizontal plane, that is, in an X direction and Y direction, such that the irradiation position P0 moves along a desired main body 6 of the joint portion 5 (see Fig. 6B, Fig. 8B, Fig. 9B, Fig. 10B, Fig. 11B, Fig. 12B, Fig. 13B, Fig. 14B, Fig. 15B, and Fig. 16B).

Fig. 19 shows the joint body 1 manufactured by the manufacturing apparatus 21 according to the present embodiment. Since the reinforcing material 3 that has been cut out is used rather than applying tension to the hoop material 20 to cut the hoop material 20, the joint portion 5 of the joint body 1 includes only the main body 6 without the end portion 7. Similarly, even when the joint body 1 is manufactured by the manufacturing apparatus 21 according to the first embodiment (Fig. 4 and Fig. 5) and the manufacturing apparatus according to the second embodiment (Fig. 17), a configuration where the reinforcing material 3 that has been cut out rather than the hoop material 20 that is continuously supplied is joined to the blank material 2 allows the joint portion 5 to include only the main body 6 without the end portion 7.

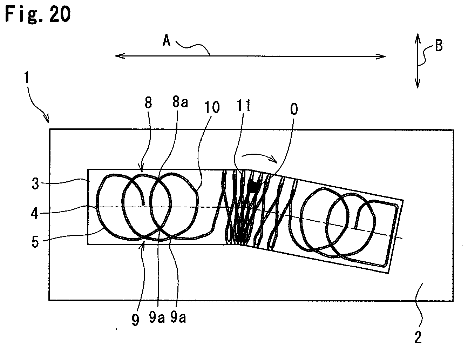

Fig. 20 shows an alternative of the joint body 1. In this alternative, the joint portion 5 is formed, based on the irradiation pattern 31 shown in Fig. 12A, at both ends of the reinforcing material 3, and the joint portion 5 is formed, based on the irradiation pattern 31 shown in Fig. 9A, at portions other than both the ends of the reinforcing material 3. This causes the joint portion 5 to have, at both the ends of the reinforcing material 3, the same shape as shown in Fig. 12B and to have, at the portions other than both the ends of the reinforcing material 3, the same shape as shown in Fig. 9B. The irradiation pattern 31 shown in Fig. 12A is applied to both the ends of the reinforcing material 3 to provide the welded portion 4 at the corners of the reinforcing material 3, thereby further increasing the joint strength of the reinforcing material 3 to the blank material 2. At least any two of the irradiation patterns 31 shown in Fig. 6A, Fig. 8A, Fig. 9A, Fig. 10A, Fig. 11A, Fig. 12A, Fig. 13A, Fig. 14A, Fig. 15A, and Fig. 16A may be used in combination.

### DESCRIPTION OF SYMBOLS

- 1: Joint body
- 2: Blank material (first metal member)
- 3: Reinforcing material (second metal member)
- 4: Welded portion
- 5: Joint portion
- 6: Main body
- 7: End portion
- 8: First longitudinal portion
- 8a: Intersecting portion
- 9: Second longitudinal portion
- 9a: Intersecting portion
- 10: Connecting portion
- 10a: Intersecting portion
- 11: Bent portion
- 12: B pillar
- 20: Hoop material (second metal member)
- 21: Manufacturing apparatus
- 22: Table
- 22a: Fixture
- 23: Blank conveying device
- 24: Hoop supplying device (supplying member)
- 24a: Supplying roll pair
- 25: Laser oscillation system
- 26: Laser light
- 27: Turning device
- 28: Cutting drive device
- 29: Control device (control member)
- 30: Arc motion device (plane position changing member)
- 31: Irradiation pattern
- 41, 42: Linear motion device
- 51: Fixture
- 52: Robot
- 52a: Robot arm
- P0: Irradiation position
- P1: Virtual irradiation position
- A: Direction (first direction)
- B: Direction (second direction)
- C: Direction
- WD: Welding direction
- CD: Conveying direction
- SD: Supplying direction
- MD: Motion direction
- LMD1: Linear motion direction
- LMD2: Linear motion direction
- AR1, AR2, AR3, AR4: Region

## Claims

1. A method of manufacturing a joint body (1) having a first metal member (2) and a second metal member (3) joined together by welding, the manufacturing method comprising:
a first process of performing the welding at a first density of welded portions (4);
**characterised in that** the method further comprising:
a second process of performing the welding at a second density of welded portions (4), higher than the first density, wherein in the second process, a positional relation of the second metal member (3) relative to the first metal member (2) is changed in plan view to bent the second metal member (3) within a plane defined by a surface of the first metal member (2), and
wherein the first process is continued after performing the second process.

2. The method for a joint body (1) according to claim 1, wherein
the first metal member (2) and the second metal member (3) are conveyed such that a direction and a conveying speed of the first metal member (2) coincide with a direction and a conveying speed of the second metal member (3), and
the conveying speed is set equal to a first speed in the first process, and is gradually reduced as the second process draws near and set equal to a second speed lower than the first speed in the second process.

3. The method for a joint body (1) according to claim 1 or 2, wherein
the first metal member (2) and the second metal member (3) are conveyed such that the direction and the conveying speed of the first metal member (2) coincide with the direction and the conveying speed of the second metal member (3), and
the bending causes the second metal member (3) to move in an arc relative to the first metal member (2) around an outer side of the second metal member (3) relative to a center line extending in a conveying direction (CD) of the second metal member (3).

4. The method for a joint body (1) according to claim 1 or 2, wherein
a welding pattern in the first process includes a continuous line that forms a closed figure one after another while shifting a position of the closed figure in one direction.

5. The method for a joint body (1) according to claim 1 or 2, wherein
the second metal member (3) is supplied obliquely from above while being pressed against the first metal member (2).

6. An apparatus (21) for manufacturing a joint body (1), the manufacturing apparatus (21) comprising:
a placing table (22) on which a first metal member (2) can be placed;
a supplying member (24) configured to supply a second metal member (3) onto the first metal member (2); and
a welding member (25) configured to join the first metal member (2) and the second metal member (3) by welding portions (4);
**characterised in that** the apparatus (21) further comprising:
a plane position changing member (30) configured to change a positional relation of the second metal member (3) relative to the first metal member (2) in plan view within a plane defined by a surface of the first metal member (2); and
a control member (29) configured to set, when the plane position changing member (30) changes the positional relation, a density of the welded portions (4) performed by the welding member (25) higher than a density of the welded portions (4) of other portions.

7. The apparatus (21) for a joint body (1) according to claim 6, further comprising a conveying member (23) configured to move the placing table (22) to convey the first metal member (2), wherein
a conveying direction (CD) of the first metal member (2) conveyed by the conveying member (23) is made identical to a supplying direction (SD) of the second metal member (3) supplied by the supplying member (24), and
the control member (29) makes a conveying speed of the first metal member (2) conveyed by the conveying member (23) identical to a supplying speed of the second metal member (3) supplied by the supplying member (24) and makes the conveying speed lower during the bending.

8. The apparatus (21) for a joint body (1) according to claim 6 or 7, further comprising the conveying member (23) configured to move the placing table (22) to convey the first metal member (2), wherein
the conveying direction (CD) of the first metal member (2) conveyed by the conveying member (23) is made identical to the supplying direction (SD) of the second metal member (3) supplied by the supplying member (24), and
in the bending performed by the plane position changing member (30), the second metal member (3) is moved in an arc relative to the first metal member (2) around an outer side of the second metal member (3) relative to a center line extending in a conveying direction (CD) of the second metal member (3).

9. The apparatus (21) for a joint body (1) according to claim 6 or 7, wherein
the control member (29) drives and controls the welding member (25) to obtain a welding pattern including a continuous line that forms a closed figure one after another while shifting a position of the closed figure in one direction.

10. The apparatus (21) for a joint body (1) according to claim 6 or 7, wherein
the supplying member (24) supplies the second metal member (3) obliquely from above while pressing the second metal member (3) against the first metal member (2).

11. A joint body (1) having a first metal member (2) and a second metal member (3) joined together by portions (4) made by welding, the joint body (1) being **characterised by** comprising a bent portion (11) obtained by changing a positional relation of the second metal member (3) relative to the first metal member (2) in plan view within a plane defined by a surface of the first metal member (2) with a density of the welding portions (4) set higher than a density of the welded portions (4) of other portions.

## Patentansprüche

1. Verfahren zum Herstellen eines verbundenen Körpers (1), der ein erstes Metallelement (2) und ein zweites Metallelement (3) aufweist, die miteinander durch Schweißen verbunden werden, wobei das Herstellverfahren Folgendes aufweist:
einen ersten Prozess zum Ausführen des Schweißens bei einer ersten Dichte an geschweißten Abschnitten (4);
**dadurch gekennzeichnet, dass**
das Verfahren des Weiteren Folgendes aufweist:
einen zweiten Prozess zum Ausführen des Schweißens bei einer zweiten Dichte an geschweißten Abschnitten (4), die höher ist als die erste Dichte, wobei
in dem zweiten Prozess eine Positionsbeziehung des zweiten Metallelementes (3) relativ zu dem ersten Metallelement (2) in einer Draufsicht geändert wird, um das zweite Metallelement (3) innerhalb einer Ebene zu biegen, die durch eine Fläche des ersten Metallelementes (2) definiert ist, und
wobei der erste Prozess nach dem Ausführen des zweiten Prozesses fortgesetzt wird.

2. Verfahren für einen verbundenen Körper (1) gemäß Anspruch 1, wobei
das erste Metallelement (2) und das zweite Metallelement (3) so befördert werden, dass eine Richtung und eine Beförderungsgeschwindigkeit des ersten Metallelementes (2) mit einer Richtung und einer Beförderungsgeschwindigkeit des zweiten Metallelementes (3) übereinstimmen, und
die Beförderungsgeschwindigkeit gleich wie eine erste Geschwindigkeit im ersten Prozess festgelegt wird, und allmählich verringert wird, wenn der zweite Prozess näher kommt, und gleich einer zweiten Geschwindigkeit im zweiten Prozess festgelegt wird, die niedriger als die erste Geschwindigkeit ist.

3. Verfahren für einen verbundenen Körper (1) gemäß Anspruch 1 oder 2, wobei
das erste Metallelement (2) und das zweite Metallelement (3) so befördert werden, dass die Richtung und die Beförderungsgeschwindigkeit des ersten Metallelementes (2) mit der Richtung und der Beförderungsgeschwindigkeit des zweiten Metallelementes (3) übereinstimmen, und
das Biegen bewirkt, dass das zweite Metallelement (3) sich in einem Bogen relativ zu dem ersten Metallelement (2) um eine Außenseite des zweiten Metallelementes (3) relativ zu einer Mittellinie bewegt, die sich in einer Beförderungsrichtung (CD) des zweiten Metallelementes (3) erstreckt.

4. Verfahren für einen verbundenen Körper (1) gemäß Anspruch 1 oder 2, wobei
ein Schweißmuster in dem ersten Prozess eine fortlaufende Linie umfasst, die eine geschlossene Figur nacheinander ausbildet, während eine Position der geschlossenen Figur in einer Richtung verschoben wird.

5. Verfahren für einen verbundenen Körper (1) gemäß Anspruch 1 oder 2, wobei
das zweite Metallelement (3) schräg von oben zugeführt wird, während es gegen das erste Metallelement (2) gepresst wird.

6. Vorrichtung (21) zum Herstellen eines verbundenen Körpers (1), wobei die Herstellvorrichtung (21) Folgendes aufweist:
einen Anordnungstisch (22), auf dem ein erstes Metallelement (2) angeordnet werden kann;
ein Lieferelement (24), das so aufgebaut ist, dass es ein zweites Metallelement (3) zu dem ersten Metallelement (2) liefert; und
ein Schweißelement (25), das so aufgebaut ist, dass es das erste Metallelement (2) und das zweite Metallelement (3) durch Schweißabschnitte (4) verbindet;
**dadurch gekennzeichnet, dass**
die Vorrichtung (21) des Weiteren Folgendes aufweist:
ein Ebenenpositionieränderungselement (30), das so aufgebaut ist, dass es eine Positionsbeziehung des zweiten Metallelementes (3) relativ zu dem ersten Metallelement (2) in einer Draufsicht innerhalb einer Ebene ändert, die durch eine Fläche des ersten Metallelementes (2) definiert ist; und
ein Steuerelement (29), das so aufgebaut ist, dass es, wenn das Ebenenpositionieränderungselement (30) die Positionsbeziehung ändert, eine Dichte der geschweißten Abschnitte (4), die durch das Schweißelement (25) ausgeführt wird, höher festlegt als eine Dichte der geschweißten Abschnitte (4) von anderen Abschnitten.

7. Vorrichtung (21) für einen verbundenen Körper (1) gemäß Anspruch 6, die des Weiteren ein Beförderungselement (23) aufweist, das so aufgebaut ist, dass es den Anordnungstisch (22) zum Befördern des ersten Metallelementes (2) bewegt, wobei
eine Beförderungsrichtung (CD) des ersten Metallelementes (2), das durch das Beförderungselement (23) befördert wird, identisch gestaltet ist zu einer Lieferrichtung (SD) des zweiten Metallelementes (3), das durch das Lieferelement (24) geliefert wird, und
das Steuerelement (29) eine Beförderungsgeschwindigkeit des durch das Beförderungselement (23) beförderten ersten Metallelementes (2) identisch zu einer Liefergeschwindigkeit des zweiten Metallelementes (3) gestaltet, das durch das Lieferelement (24) geliefert wird, und die Beförderungsgeschwindigkeit während des Biegens niedriger gestaltet.

8. Vorrichtung (21) für einen verbundenen Körper (1) gemäß Anspruch 6 oder 7, die des Weiteren das Beförderungselement (23) aufweist, das so aufgebaut ist, dass es den Anordnungstisch (22) zum Befördern des ersten Metallelementes (2) bewegt, wobei
die Beförderungsrichtung (CD) des ersten Metallelementes (2), das durch das Beförderungselement (23) befördert wird, identisch gestaltet ist zu der Lieferrichtung (SD) des zweiten Metallelementes (3), das durch das Lieferelement (24) geliefert wird, und
bei dem Biegen, das durch das Ebenenpositionieränderungselement (30) ausgeführt wird, das zweite Metallelement (3) in einem Bogen relativ zu dem ersten Metallelement (2) um eine Außenseite des zweiten Metallelementes (3) relativ zu einer Mittellinie bewegt wird, die sich in einer Beförderungsrichtung (CD) des zweiten Metallelementes (3) erstreckt.

9. Vorrichtung (21) für einen verbundenen Körper (1) gemäß Anspruch 6 oder 7, wobei
das Steuerelement (29) das Schweißelement (25) antreibt und steuert, um ein Schweißmuster zu erzielen, das eine fortlaufende Linie umfasst, die eine geschlossene Figur nacheinander ausbildet, während eine Position der geschlossenen Figur in einer Richtung verschoben wird.

10. Vorrichtung (21) für einen verbundenen Körper (1) gemäß Anspruch 6 oder 7, wobei
das Lieferelement (24) das zweite Metallelement (3) schräg von oben liefert, während das zweite Metallelement (3) gegen das erste Metallelement (2) gepresst wird.

11. Verbundener Körper (1), der ein erstes Metallelement (2) und ein zweites Metallelement (3) hat, die miteinander durch Abschnitte (4) verbunden sind, die durch Schweißen hergestellt sind, wobei der verbundene Körper (1) **dadurch gekennzeichnet ist, dass** er Folgendes aufweist
einen gebogenen Abschnitt (11), der erlangt wird durch Ändern einer Positionsbeziehung des zweiten Metallelementes (3) relativ zu dem ersten Metallelement (2) in einer Draufsicht innerhalb einer Ebene, die durch eine Fläche des ersten Metallelementes (2) definiert ist, wobei eine Dichte der geschweißten Abschnitte (4) höher festgelegt ist als eine Dichte der geschweißten Abschnitte (4) von anderen Abschnitten.

## Revendications

1. Procédé de fabrication d'un corps assemblé (1) comportant un premier élément métallique (2) et un second élément métallique (3) assemblés entre eux par soudage, le procédé de fabrication comprenant :
un premier processus consistant à réaliser le soudage selon une première densité de parties soudées (4) ;
**caractérisé en ce que** le procédé comprend en outre :
un second processus consistant à réaliser le soudage selon une seconde densité de parties soudées (4), supérieure à la première densité, dans lequel :
dans le second processus, une relation de position du second élément métallique (3) par rapport au premier élément métallique (2) est modifiée sur une vue en plan pour cintrer le second élément métallique (3) dans un plan défini par une surface du premier élément métallique (2), et
dans lequel le premier processus est poursuivi après la réalisation du second processus.

2. Procédé pour corps assemblé (1) selon la revendication 1, dans lequel :
le premier élément métallique (2) et le second élément métallique (3) sont transportés de manière qu'une direction et une vitesse de transport du premier élément métallique (2) coïncident avec une direction et une vitesse de transport du second élément métallique (3), et
la vitesse de transport est réglée pour être égale à une première vitesse dans le premier processus, et est progressivement diminuée à mesure que le second processus approche et est réglée pour être égale à une seconde vitesse inférieure à la première vitesse dans le second processus.

3. Procédé pour corps assemblé (1) selon la revendication 1 ou 2, dans lequel :
le premier élément métallique (2) et le second élément métallique (3) sont transportés de manière que la direction et la vitesse de transport du premier élément métallique (2) coïncident avec la direction et la vitesse de transport du second élément métallique (3), et
le cintrage amène le second élément métallique (3) à se déplacer en un arc par rapport au premier élément métallique (2) autour d'un côté extérieur du second élément métallique (3) par rapport à une ligne centrale s'étendant dans une direction de transport (CD) du second élément métallique (3).

4. Procédé pour corps assemblé (1) selon la revendication 1 ou 2, dans lequel :
un motif de soudure dans le premier processus comprend une ligne continue qui forme au fur et à mesure une figure fermée tout en décalant une position de la figure fermée dans une direction.

5. Procédé pour corps assemblé (1) selon la revendication 1 ou 2, dans lequel :
le second élément métallique (3) est acheminé obliquement par le haut tout en étant pressé contre le premier élément métallique (2).

6. Appareil (21) permettant de fabriquer un corps assemblé (1), l'appareil de fabrication (21) comprenant :
une table de mise en place (22) sur laquelle peut être mis en place un premier élément métallique (2) ;
un élément d'acheminement (24) configuré pour acheminer un second élément métallique (3) sur le premier élément métallique (2) ; et
un élément de soudage (25) configuré pour assembler le premier élément métallique (2) et le second élément métallique (3) au moyen de parties de soudage (4)
**caractérisé en ce que** l'appareil (21) comprend en outre :
un élément de changement de position en plan (30) configuré pour modifier une relation de position du second élément métallique (3) par rapport au premier élément métallique (2) sur une vue en plan, dans un plan défini par une surface du premier élément métallique (2), et
un élément de commande (29) configuré pour régler, lorsque l'élément de changement de position en plan (30) modifie la relation de position, une densité des parties soudées (4) réalisées par l'élément de soudage (25), pour qu'elle soit supérieure à une densité des parties soudées (4) d'autres parties.

7. Appareil (21) pour corps assemblé (1) selon la revendication 6, comprenant en outre un élément de transport (23) configuré pour déplacer la table de mise en place (22) afin de transporter le premier élément métallique (2), dans lequel :
une direction de transport (CD) du premier élément métallique (2) transporté par l'élément de transport (23) est rendue identique à une direction d'acheminement (SD) du second élément métallique (3) acheminé par l'élément d'acheminement (24), et
l'élément de commande (29) rend une vitesse de transport du premier élément métallique (2) transporté par l'élément de transport (23) identique à une vitesse d'acheminement du second élément métallique (3) acheminé par l'élément d'acheminement (24) et rend la vitesse de transport inférieure au cours du cintrage.

8. Appareil (21) pour corps assemblé (1) selon la revendication 6 ou 7, comprenant en outre l'élément de transport (23) configuré pour déplacer la table de mise en place (22) afin de transporter le premier élément métallique (2), dans lequel :
la direction de transport (CD) du premier élément métallique (2) transporté par l'élément de transport (23) est rendue identique à la direction d'acheminement (SD) du second élément métallique (3) acheminé par l'élément d'acheminement (24), et
lors du cintrage réalisé par l'élément de changement de position en plan (30), le second élément métallique (3) est déplacé en un arc par rapport au premier élément métallique (2) autour d'un côté extérieur du second élément métallique (3) par rapport à une ligne centrale s'étendant dans une direction de transport (CD) du second élément métallique (3).

9. Appareil (21) pour corps assemblé (1) selon la revendication 6 ou 7, dans lequel :
l'élément de commande (29) entraîne et commande l'élément de soudage (25) pour obtenir un motif de soudure comprenant une ligne continue qui forme au fur et à mesure une figure fermée tout en décalant une position de la figure fermée dans une direction.

10. Appareil (21) pour corps assemblé (1) selon la revendication 6 ou 7, dans lequel :
l'élément d'acheminement (24) achemine le second élément métallique (3) obliquement par le haut, tout en pressant le second élément métallique (3) contre le premier élément métallique (2).

11. Corps assemblé (1) comportant un premier élément métallique (2) et un second élément métallique (3) assemblés entre eux par des parties (4) réalisées par soudage, le corps assemblé (1) étant **caractérisé en ce qu'**il comprend une partie cintrée (11) obtenue par modification d'une relation de position du second élément métallique (3) par rapport au premier élément métallique (2) sur une vue en plan, dans un plan défini par une surface du premier élément métallique (2), une densité des parties de soudage (4) étant réglée pour être supérieure à une densité des parties soudées (4) d'autres parties.
